Europäisches Patentamt

European Patent Office

Office européen des brevets

(11) Publication number: **0 175 424**
**A2**

(12) **EUROPEAN PATENT APPLICATION**

(21) Application number: **85201482.8**

(22) Date of filing: **17.09.85**

(51) Int. Cl.⁴: **G 01 S 11/00**

(30) Priority: **19.09.84 IT 8281084**

(43) Date of publication of application: **26.03.86**
**Bulletin 86/13**

(84) Designated Contracting States: **AT BE CH DE FR GB LI LU NL SE**

(71) Applicant: **COMPAGNIA INVESTIMENTI E PARTECIPAZIONI AZIONARIE CIPA S.p.A., Via G. Fara 39, I-20124 Milano (IT)**

(72) Inventor: **Ugo, Lucinio, Via Valdirivo 25, I-34132 Trieste (IT)**

(74) Representative: **De Carli, Erberto et al, ING. BARZANO' & ZANARDO MILANO S.p.A. Via Borgonuovo, 10, I-20121 Milano (IT)**

(54) Optical-electronic device pre-arranged for the determination of the speed of a travelling vehicle, by means of a laser ray.

㉗ The invention relates to an optical-electronic device of simple theroretical conception, allowing the direction and the speed to be detected of a running vehicle without direct external reference points, and which, although is placed completely isolated within its interior, yields data which can be also very precise, rapidly and continuously. It uses a ray of coherent laser light — produced on the spot — of low intensity, and used as a relative reference element, in combination with parallel reflecting planes. With a time measurement repeated in rapid sequence, by means of a clock with electronic data processor and by means of a photodetector, from the laser ray the computation elements necessary for determining the displacements due to the travelling speed and referred to outer reference elements previously extrapolated during the instrument calibration step are drawn. By being calibrated in compliance with the different cases, the device can measure both low and high speed values on any types of vehicles on to which it may be installed. The instrument is moved around its supporting point in a way very similar to the radar aerials, but as soon as the travelling direction has been identified, this movement is limited to short verification periods spaced over time.

It must be stated in advance that all various systems for the measuring of the speed of travelling bodies, more or less complex and more or less efficient systems presently used, depend on the existence of other reference objects external to them, with the need of maintaining, to the purpose of effecting the said measurement, direct reference contacts by means of either mechanical or electronic devices, or with the aid of radiant energies of various types. As an example, we mention the simplest methods used on the various vehicles constrained to the terrestrial surface, which use partly electrical or electronic mechanical speedometers. For the other methods, it is enough to mention that from on board of the travelling vehicles the sound waves and the supersonic waves may be sometimes used, and sometimes the radio waves or the optical waves may be used, by taking advantage of the "echo" effects outcoming from external reference obstacles, by detecting, i.e., by means of successive measurements of times used during the travelling, progressive distance variations. Similar methods are then used in those radar systems, both for on board and for installation on other outer spots, but which are always acting on the basis of the principle of taking advantage of the echo effects as produced by radio electromagnetic waves of different wavelengthes. Devices exist however which take advantage of the Doppler effects of optical waves of different frequencies to the purpose of determining speeds relative to pre-established reference bodies which may be even very far away, represented by radio or light emitting sources, known of natural or artificial origin. Particular systems are often used to the

2.

0175424

purpose of measuring the running rate of fluids also by exploiting the phenomenon of interference, and that of the diffusion with frequency and phase change of the light outcoming from known emitting sources.

According to the postulates of relativity, generally accepted on the basis of their experimental confirmation, the light energy travels in the so-called vacuum space, at the constant rate of 299,732,400 metres per second and, as being commonly regarded as having no mass, when it is emitted in this vacuum space by a moving source, is not actually influenced in its propagation rate by this motion, save undergoing instead positive or negative frequency variations, due to the Doppler effect. Moreover its propagation from the source in the absence of perturbations, once emitted, occurs along a ray in a straight line in the homogeneous vacuum space, in a direction perpendicular to the emission plane, said ray continuing propagating until its electromagnetic energy is exhausted, without changing its direction relatively to the place from which it started at that certain time.

A light ray with this immutable trajectory of its own establishes hence, or better, defines a fixed position in the space, relatively to any reference points selected at the time of its emission.

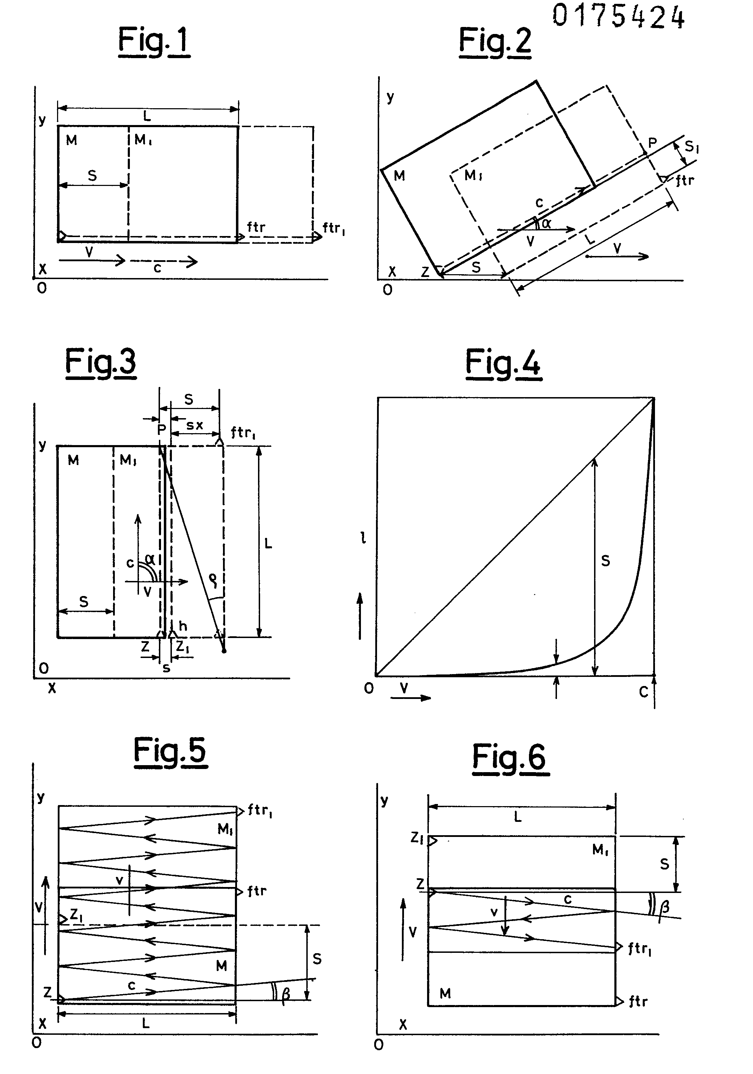

This fact is illustrated in the drawing table, figs. 1, 2 and 3, by considering the emission of a light impulse h emitted inside a body M travelling through the space at a speed V. The body M, whose length is L, travels through a space S, t being the time needed by the light to reach ftr. The time length of the light impulse h is a fraction of t. As it can be seen, in front of the light source z a photodetector ftr is provided. With "c" the speed of the light impulse is indicated, and O represents the centre of the x, y system of the reference coordinates, assumed as correlated to previously established reference points. If the body M is stationary, i.e., in the state of absolute rest, with any orientation, the light ray drops always on the photodetector ftr.

In fig. 2 instead it is seen the body M, which, due to its speed V, travels during the time t needed by the light ray to travel along the distance L, by a length $Vt = S$, and as the duration of the impulse is $\tau$, corresponding to the length $V.\tau = s$, we'll need to displace ftr up to the point P, which shall be determined by $S - s = S_x$.

Figs. 1, 2 and 3 serve to evidence how the length $S_x$ varies in its value as a function of the angle $\alpha$ subtended by the two straight lines representing the directions of the two speeds: V of the body M; and "c" of the light emitted by z.

In fig. 5 the relativistic correction effect is illustrated, which is meaningless for not high speeds, up to being nearly negligible, whilst it becomes quite large for increasing speeds approaching the light speed. It is quite evident that the value of $S_x$ which can be detected is highest when the direction of V is perpendicular to that of the light "c". Of course, by revolving the body about itself, the direction of the motion according to V can be determined by measuring continuously, or over very short time intervals, the value of $S_x$. The Fitzgerald-Lorentz contraction makes it impossible to measure V by means of a time direct comparison, on the basis of the speed "c" when the directions of V and of "c" are parallel: this is not so however when they are on the contrary perpendicular or form anyway an angle between each other. However, for it to be possible to experimentally verify such a situation, the light impulse must be of course very short (duration of some tens of picoseconds), and moreover the length L of the light path must be consistent (at least some tens of metres). An important condition is that it may be possible to move ftr by a micrometric motion, and that when starting it be aligned relatively to the contain er with the light source z and to one of its sides, assumed as the reference basis. When V and "c" have directions perpendicular to each other, we can have for not-relativistic speeds:

$$S = V \frac{L}{c} \text{ , and } V = \frac{S.c}{L}$$

and as $S = S_x + s$, we'll have:

$$V = \frac{(S_x + s) \cdot c}{L} \text{ .}$$

The perpendicularity is the essential condition for the best detection and i.e. for a possible practical application. A measurement can however be obtained also with dif ferent angles, provided that they are known.

In general, the principle may be taken in consideration as the basis for measuring speeds of travelling bodies with an inner device without directly referring to the out side. From the practical point of view, however, it can-not be embodied rigorously as it has been enunciated, in that, as the light speed is very high, the times to be detected are too short, or the dimensions are too small of

displacement length $S_x$ within possible equipment pieces of reasonable size. To that purpose, instead of using only a laser ray directly aimed towards a photodetector, as shown in fig. 1, we'll use a ray reflected many times between two or more reflecting planes parallel and opposed two by two as shown in figs. 5 and 6, wherein the comparison speed v can be obtained as a function of the angle β by means of the relationship v = c . tanβ, from which, as v can assume any values, it shall be possible for us to measure both small and very high speeds. In figs. 5 and 6, two procedures are shown for carrying out some measurements by comparing V and v with each other, the method of fig. 5 is however the one offering in our opinion the possibility of a greater precision.

In fig. 5, the greater the time needed by the light to reach ftr from the source z, the greater the speed V with which the container of the mirrors SP1 and SP2, M, travels, such speed depending moreover on v = c . tanβ, so that, if v and V become equal, v/V = 1, the time becomes infinite and the light ray shall never reach the photodetector ftr. Also the system of fig. 6 can be moreover useful under some special circumstances. When measuring v in this way, the shorter the time, the greater the speed V; if V = v, the time has its minimum value. In both cases it is however possible to determine also the value of Sinstead of time, should this time be prefixed as a constant value or interval. Also counting the number of reflections between the mirrors is another way of determining S, from which the speed v can be computated. For very accurate measurements, the ratio v/V is preferably kept very close to 1, so that the time is either very long or very short, or the reflections become many or few, according to which one of the two systems has been used in the measurement.

Concluding, we have always two operating ways: one, by keeping constant the distance between the source z and the photodetector, hence measuring the time, and one by measuring the distance between ftr and $ftr_1$ when the ray reaches $ftr_1$, also counting e.g. the number of the reflection occurring between the mirrors. As a time measurement is more practical and precise than a space measurement, and this at least as regards the conditions of use of such an instrument as the one supposed, the design of a device measuring the speed by means of the first method, i.e., according to a variable time, keeping constant the length of the path prefixed on the container, shall be regarded as more interesting.

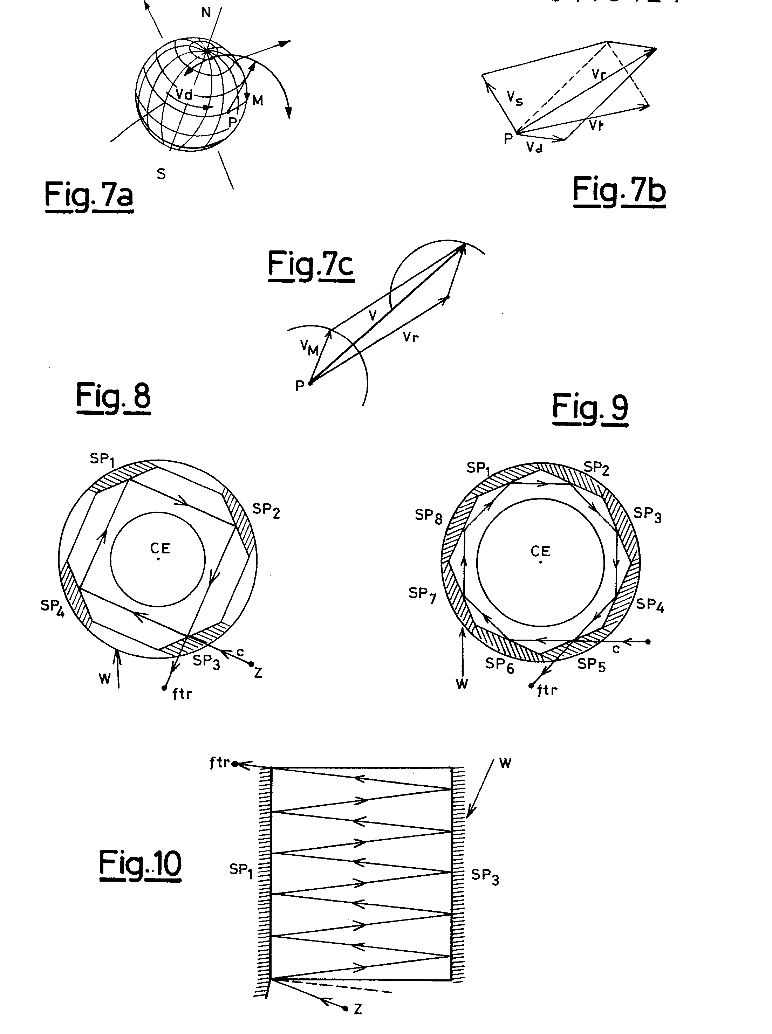

In order to have a more compact instrument, at least four reflecting planes parallel two by two opposite at angles of 90° must be used, also to the purpose of obtaining, in addition to the reduction in size, lower reflection losses, with the possibility hence of using a longer light total path (figs. 8 and 9). It is obvious that, once that all the parameters of the device have been defined, and that it has been manufactured, a particular calibration must be carried out, for it to be possible for it to relate, by means of the data it supplies, the total V found to a $V_r$ useful and relative to an initial outer reference system. The instrument supplies us with the data to identify a single direction and a single speed resulting from the whole combination of the various directions and speeds of the component motions which are due to the motion of the solar system, of the Earth's revolution around the sun, and of the Earth's rotation, this latter being different as a function of the point from which the motion of the body M originated. It is necessary that the axis of the instrument can be rotated in the space with at least two degrees of freedom within the body M within which it is installed, and that this rotation can be repeated at regular intervals. In fig. 7 a, b and c, an example is shown of how the speed V resulting from the measurement is composed in the reality by other speeds: The speed $V_s$ of the shift of the Solar system, the speeds $V_t$, $V_d$ of the Earth, wherein however other possible components are not appearing. The combination of the motions (fig. 7a) at the starting of the vehicle M can be very variable, and can give rise to many different results $V_r$ according to the hours of the day, of the month, and so forth, which however compose themselves into a single resulting vector which is also a function of V. By rotating the instrument around itself in two freedom planes first and then in one only, limited to an arc of a few degrees, the measurements must yield the maximum value in correspondence of the resultant $V_r$ of course when the axis of it shall coincide with the direction of this $V_r$. The value found shall be the one to be introduced for the computation of V, subtracting the other vectors of the component speeds, of course known a priori, as each reference must be made relatively to the calibration situation before the beginning of the motion of M.

Example of practical embodiment of the instrument with the use of the provided measurement system.

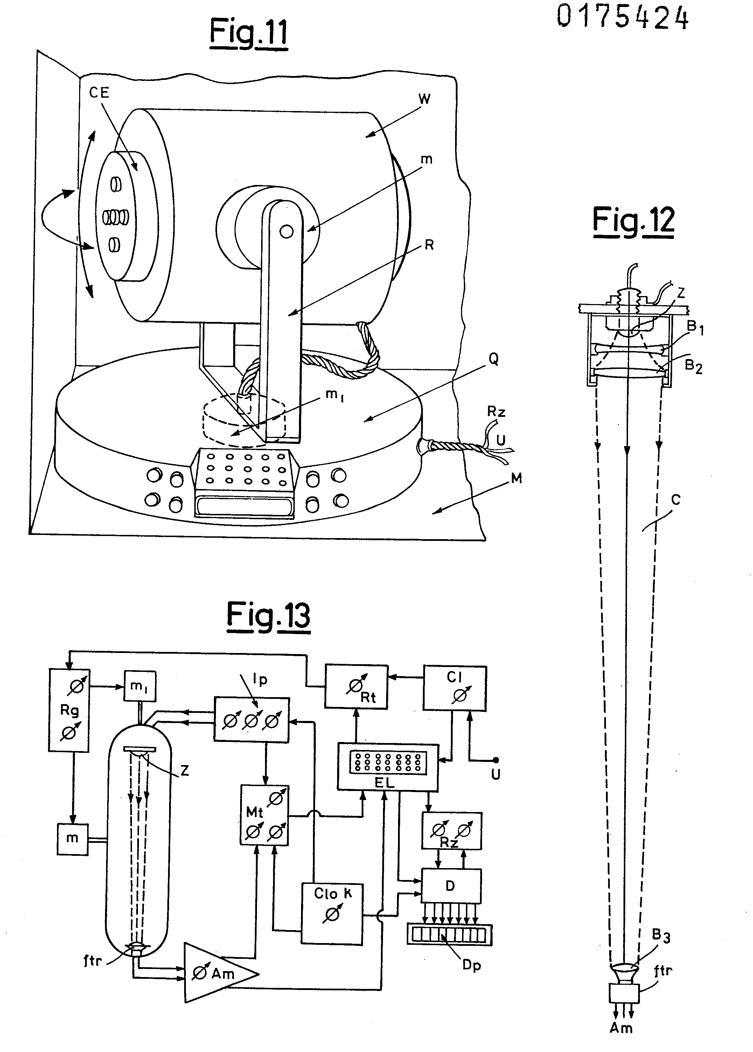

In figs. 8 and 9 the system is illustrated of the use of the reflecting planes, wherein at the centre a space CE appears, within which the various necessary electronic circuits as per the electric block diagram of fig. 13 can be installed. In fig. 10 it can be seen instead how the laser ray starting from the source z is made enter into the container w of the reflecting planes SP1, SP2 and SP3 and SP4 etc.

The unit w is then shown in a perspective view, as positioned on a Cardan joint R and a platform Q with the motors m and $m_1$ to the purpose of obtaining the rotations in two perpendicular planes, necessary for the determination of the direction of the component $V_r$ containing also the V to be determined. The optical system can be composed in principle by a semiconductor laser z whose emitted rays are enlarged by a biconcave bicylindrical lens $B_1$ and further focused on the photodetector ftr by means of another bicylindrical planoconvex or biconvex leans of greater size $B_2$. By so doing, the ray assumes the shape of an elongated beam according to a rectangular area. A last bicylindrical lens $B_3$ collects and focuses the light on to the photodetector ftr to a further extent.

In fig. 13 an electrical block diagram is shown, for the direct reading of V by means of electronic circuits. The basis of the times is given by a very sensitive (highfrequency) clock controlling the laser impulse emitter and scans the time during the intervals between the leaving of the light ray from the source z and its arrival to the photodetector ftr. The starting signal and the arrival signal determine the count of the fractions of second elapsed, delivering the data to the data processor which compares the value increases or decreases, from which defines a governing of the motors rotating the container w according to the needs inherent in the most favourable position for the measurement.From the data processor EL the detected data relating to the times employed by the light ray, as a function of the initial calibration of the instrument on considering the various speed components $V_s$, $V_t$ and $V_d$ are transformed by vectorial computation into real data corresponding to V and directly shown on a display DP and at the same time permanently recorded in Rz. A further input of compatible information data arriving from the inertial compass or laser U detecting the accelerations or the rotations of the body M into the processor causes the direct correction of the motion of the motors m and $m_1$, so that the end data supplied by the display remain as close to the reality as possible. When the values of V (see fig. 4) to be measured are far from a certain threshold, all the optical phenomena occurring in the operating steps of the device are kept under perfect control by means of simple artifices. As for the reflection, it may be said that the possible small relativistic angular deviations from the trajectories of the incident and reflected rays can be zeroed by means of the particular arrangements adopted in the positioning of the reflecting planes. The Doppler effect is absolutely unimportant in our case, precisely due to the already adopted positioning, as mentioned. It is on the contrary notably important the accuracy degree reached and maintained in the manufacturing of the several mechanical and optical components necessary for the manufacturing of the instrument, wherein the reflecting planes and their installation must of of extreme accuracy. It is necessary that the best reflection conditions be exploited - in the present case by providing at least four reflecting parallel planes instead of two -

10.

0175424

in order to have the lowest possible losses of light as for the absorption of energy, and other dispersive causes due maybe to the diffraction, always considerably present also in the vacuum.

The present disclosure has been given to exemplifying and not limitative purpose, in that the measurement device provided is under improvement, of course foreseeable, due to the various special practical applications that it can possibly have.

CLAIMS:

0175424

1. Optical-electronic device pre-arranged for the determination of the speed of a travelling vehicle, by means of laser ray, characterized in that to the purpose of measuring the travelling speed of a travelling vehicle it uses a light or laser ray, emitted and analyzed within its interior.

2. Optical-electronic device as claimed in claim 1, characterized in that the laser ray is made be reflected many times between two or more reflecting planes positioned as opposed two by/within a container within which a high vacuum has been made.

3. Optical-electronic device as claimed in claim 1, characterized in that by means of time measurements obtained by means of an electronic clock and processed bya programmed data processor, it gives the travelling speed of a vehicle within which it is installed.

4. Optical-electronic device as claimed in claim 1, characterized in that by means of rotations on at least two freedom planes it is capable to give the direction of the travelling speed.

5. Optical-electronic device as claimed in claim 1, characterized in that the time measurements obtained by means of the comparison between the starting time of the laser impulses and the time of the respective arrival at the photodetector are used also to obtain, always by means of the data processor, the data necessary to control the rotations of the stepped motors.

6. Optical-electronic  device as claimed in claim 1,characterized in that for the research of the travelling direction necessary for the measurement of speed,it uses two independent but mutually coordinated stepper motors.

7. Optical-electronic device as claimed in claim 1, characterized in that the container is supported by a Cardan suspension, to allow its mobility on at least two perpendicular freedom planes.

8.Optical-electronic device as claimed in claim 1, characterized in that it uses a source of laser coherent light activated by an impulse generator commanded and synchronized with the electronic clock.

9.Optical-electronic device as claimed in claim 1, characterized in that the focusing of the light ray can also be carried out by means of bicylindrical lenses in order that  the cross section area of the ray may assume a rectangular or anyway elongated shape instead of circular.

10.Optical-electronic device as claimed and claim 1, characterized in that although it can be used with any light rays, a laser ray is on the contrary used, both to decrease the losses and to facilitate the production of the light impulses by means of an electronic impulse generator.

11. Optical-electronic device as claimed in claim 1, characterized in that it uses a sensitive photodetector adjusted on the wavelength of the laser.

12. Optical-electronic device as claimed in claim 1, characterized in that the measurement is continuously repeated with sequences programmed by the data processor or also prearranged on manual control, according to the foreseen values of the speed to be determined.

13. Optical-electronic device as claimed in claim 1, characterized in that inside the interior of the container and of the reflecting planes another container is positioned, inside which all the electrical-electronic circuits or a portion thereof are installed, as pertinent to the instrument according to the stated scheme.

Fig.1  Fig.2  Fig.3  Fig.4  Fig.5  Fig.6

0175424

1/3

Fig.7a

Fig.7b

Fig.7c

Fig.8

Fig.9

Fig.10

0175424

0175424

Fig.11

Fig.12

Fig.13